# EUROPEAN PATENT APPLICATION

(11) **EP 4 571 256 A1**
(43) Date of publication of application: **18.06.2025**
(21) Application number: 24209156.9
(22) Date of filing: 28.10.2024
(51) Int. Cl.: G01C 21/20, G08G 5/21, G08G 5/32, G08G 5/55, G08G 5/76, G08G 5/34

(54) **OPTIMIZED FORECAST RETRIEVAL FOR AN ANTICIPATED FLIGHT PATH OF AN AERONAUTICAL VEHICLE**

(30) Priority: 13.12.2023 US 202318538938
(71) Applicant: The Boeing Company, Arlington, VA 22202 (US)
(72) Inventor: Williams, Jeffrey Lee, Arlington, VA, 22202 (US); Hile, Jessica Lyn, Arlington, VA, 22202 (US)
(74) Representative: Hoffmann Eitle

(57) **Abstract**

According to the present application, a method (200, 300) performed by a computing system (600) of one or more computing devices (610, 620) comprises performing a forecast update process (222) for an aeronautical vehicle (AV) (110) during flight. The forecast update process (222) includes: determining an anticipated flight path (134) for the AV (110) in three dimensions through an operating environment (100) between a current location (126) and a target destination location (124) based on flight plan data (648, 663); identifying, based on the anticipated flight path (134), a set of cells (430) within a three-dimensional cell array (150) forming a spatial representation (152) of the operating environment (100); and for each cell (160) of the set of cells (430): determining a cell-specific forecast time (233) for the cell (160) based on a time-based location profile (219) of the AV (110) defined by the anticipated flight path (134), retrieving forecast data (650, 666) for the cell (160) corresponding to the cell-specific forecast time (233), and outputting the forecast data (650, 666) retrieved for the cell (160).

## Description

### FIELD

The subject matter of the present disclosure relates generally to retrieving forecast data for an anticipated flight path of an aeronautical vehicle.

### BACKGROUND

Personnel operating aircraft and other aeronautical vehicles rely on forecasts of weather and aeronautical activity for purposes of navigation. During flight, forecast data can be downloaded to an on-board computing device over a wireless communication link. As an example, satellite-based communications can be used to request and receive forecast data wirelessly during flight of an aeronautical vehicle. In at least some examples, the wireless communications link used to retrieve forecast data during flight can be costly on a per data unit basis and can have limited bandwidth as compared to terrestrial-based communication links.

### SUMMARY

According to an example of the present disclosure, a method performed by a computing system of one or more computing devices comprises performing a forecast update process for an aeronautical vehicle (AV) during flight. The forecast update process includes determining an anticipated flight path for the AV in three dimensions through an operating environment between a current location and a target destination location based on flight plan data. The anticipated flight path includes an altitude profile of the AV over a geographic region through the operating environment and a time-based location profile of the AV along the anticipated flight path. The forecast update process further includes identifying, based on the anticipated flight path, a set of cells within a three-dimensional cell array forming a spatial representation of the operating environment. For each cell of the set of cells, the forecast update process further includes: determining a cell-specific forecast time for the cell based on the time-based location profile of the AV, retrieving forecast data for the cell corresponding to the cell-specific forecast time, and outputting the forecast data retrieved for the cell.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 depicts an operating environment of an example aeronautical vehicle.
FIG. 2 is a flow diagram depicting an example method that can be performed by a computing system of one or more computing devices to retrieve forecast data.
FIG. 3 is a flow diagram depicting another example method that can be performed by a computing system of one or more computing devices to retrieve forecast data.
FIG. 4 is a graph depicting a relationship between altitude, geographic distance, and cell-specific forecast time for an example anticipated flight path for an AV.
FIG. 5 schematically depicts an example graphical user interface by which forecast data can be output.
FIG. 6 is a schematic diagram depicting an example computing system that can perform the methods of FIGS. 2 and 3.
FIG. 7 is a schematic diagram depicting additional aspects of the computing system of FIG. 6.

### DETAILED DESCRIPTION

As briefly introduced above, personnel operating aeronautical vehicles rely on forecasts of weather and aeronautical activity for purposes of navigation. During flight, forecast data can be downloaded from a remote source to an on-board computing device over a wireless communication link. As an example, satellite-based communications can be used to request and receive forecast data wirelessly during flight of an aeronautical vehicle. In at least some examples, the wireless communications link used to retrieve forecast data during flight can be costly on a per data unit basis and can have limited bandwidth as compared to terrestrial-based communication links.

In at least some examples, a quantity of forecast data downloaded over a wireless communications link during flight of an aeronautical vehicle can be reduced by selectively retrieving forecast data for an anticipated flight path of the aeronautical vehicle within a limited region. According to an example, a forecast update process can be performed by a computing system for an aeronautical vehicle during flight. The forecast update process includes determining an anticipated flight path for the AV in three dimensions through an operating environment between a current location and a target destination location based on flight plan data. The anticipated flight path includes an altitude profile of the AV over a geographic region through the operating environment and a time-based location profile of the AV along the anticipated flight path. The forecast update process further includes identifying, based on the anticipated flight path, a set of cells within a three-dimensional cell array forming a spatial representation of the operating environment. For each cell of the set of cells, the forecast update process further includes: determining a cell-specific forecast time for the cell based on the time-based location profile of the AV, retrieving forecast data for the cell corresponding to the cell-specific forecast time, and outputting the forecast data retrieved for the cell. In at least some examples, proximity thresholds and other settings can be used to define a forecast update interval, a geographic scope, and a resolution of retrieved forecast data in relation to the anticipated flight path.

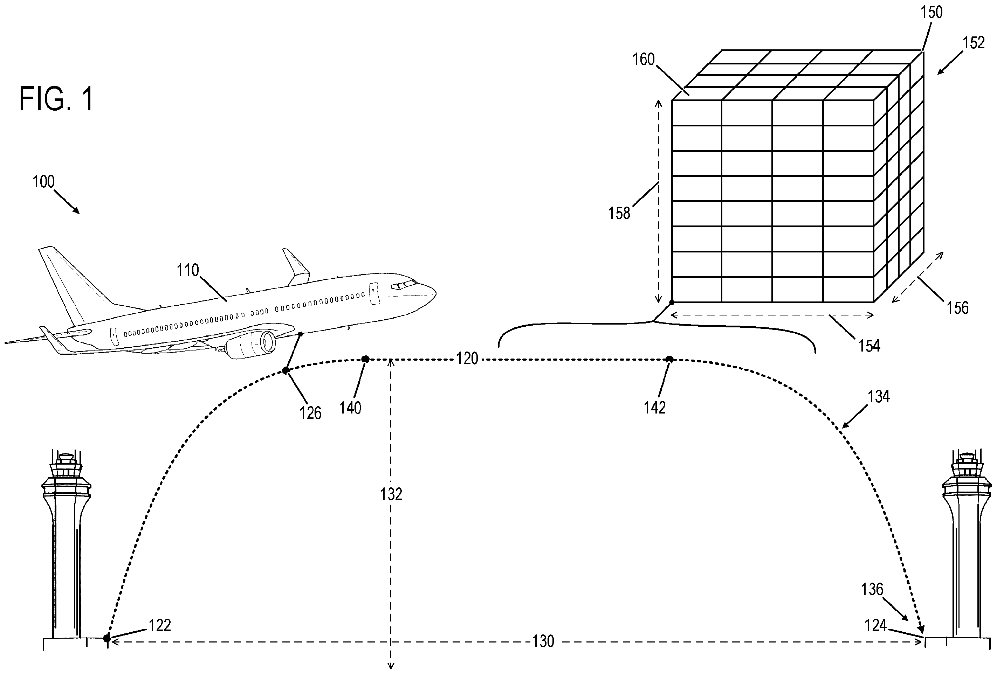

FIG. 1 depicts an operating environment 100 of an example aeronautical vehicle (AV) 110. In this example, AV 110 takes the form of a commercial passenger aircraft. AV 110 may take other forms, including other types of aircraft.

In this example, AV 110 is travelling along a flight path 120 from an initial location 122 (e.g., a first airport) toward a destination location 124 (e.g., a second airport). A current location 126 of AV 110 along flight path 120 is depicted schematically in FIG. 1. Flight path 120 spans a geographic region 130 over which AV 110 travels at an altitude 132 over the geographic region within operating environment 100. Flight path 120 has an altitude profile in which altitude 132 varies over geographic region 130.

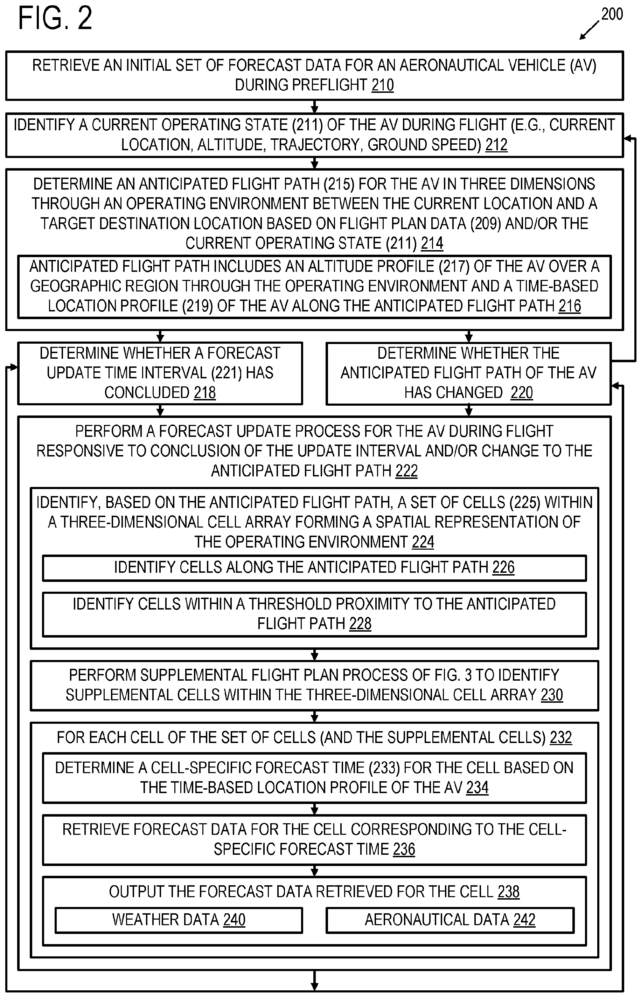

A portion of flight path 120 not yet traveled by AV 110 between a current location (e.g., 126) of the AV and a destination location (e.g. 124) can be referred to as an anticipated flight path 134. Additionally, a destination location (e.g., 124) not yet reached by AV 110 while traveling along flight path 120 can be referred to as a target destination location 136. As described in further detail with reference to FIG. 2, an anticipated flight path and/or a target destination location of an AV may change during flight based on a variety of factors. The anticipated flight path and target destination location may be determined based on flight plan data, as an example.

Flight path 120 can be defined by initial location 122, current location 126, destination location 124, and one or more intermediate waypoints located between the initial location and the destination location, such as example waypoints 142 and 144. In this example, waypoint 142 defines a point along flight path 120 that transitions from an ascent in altitude by AV 110 from initial location 122 to a cruising altitude, and waypoint 144 defines a point along flight path 120 that transitions from the cruising altitude to a decent in altitude by the AV. It will be understood that a flight path (e.g., 120) can be defined by any suitable quantity of waypoints. Initial location 122, current location 126, destination location 124, and intermediate waypoints (e.g., 140, 142) can each be defined by a respective longitude, latitude, and altitude within operating environment 100. Similarly, anticipated flight path 134 can be defined by current location 126, target destination location 136, and one or more intermediate waypoints (e.g., 140, 142) located between the current location and the target destination location.

Within FIG. 1, a portion of a three-dimensional cell array 150 is schematically depicted that forms a spatial representation 152 of operating environment 100. Cell array 150 includes a plurality of three-dimensional cells each having a respective position and size within a longitude dimension 154, a latitude dimension 156, and an altitude dimension 158. An example cell 160 of the plurality of cells is identified in FIG. 1. As an illustrative example, each cell of cell array 150 can be defined to have a size of 1 mile in longitude dimension 154, 1 mile in longitude dimension 156, and 1,000 feet in altitude dimension 158. It will be understood that cells of a cell array (e.g., 150) can have other suitable sizes to provide a desired level of spatial resolution.

Flight path 120 and anticipated flight path 134 can be described as passing through a set of cells of cell array 150. Accordingly, for a given flight path or anticipated flight path, a set of cells through which the flight path or anticipated flight path passes can be identified within cell array 150. Similarly, AV 110 that travels or is anticipated to travel along a flight path or anticipated flight path can be described as passing through a set of cells of cell array 150, enabling the set of cells through which the AV passes or is anticipated to pass to be identified within cell array 150. As described in further detail with reference to FIG. 2, for example, forecast data may be retrieved and output via a computing system for particular cells of a cell array (e.g., 150) that are identified based on an anticipated flight path of an AV.

Flight path 120 and anticipated flight path 134 can be further defined by a time-based location profile of AV 110 along the flight path or anticipated flight path. This time-based location profile can identify an actual or anticipated time of arrival of the AV at any location along the flight path or the anticipated flight path, including at initial location 122, destination location 124, target destination location 136, current location 126, and intermediate waypoints (e.g., 140, 142).

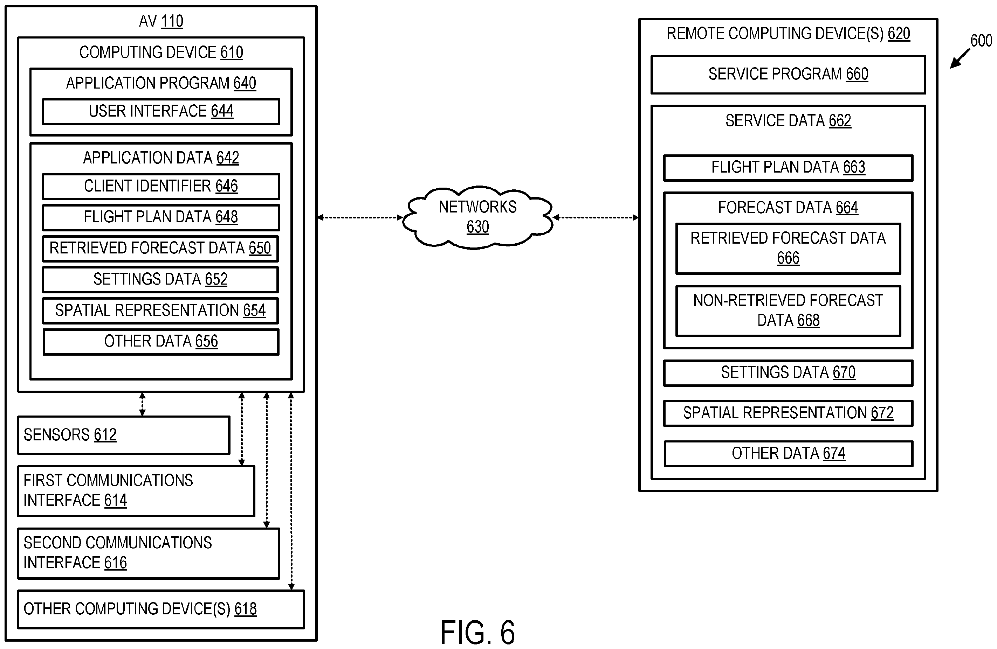

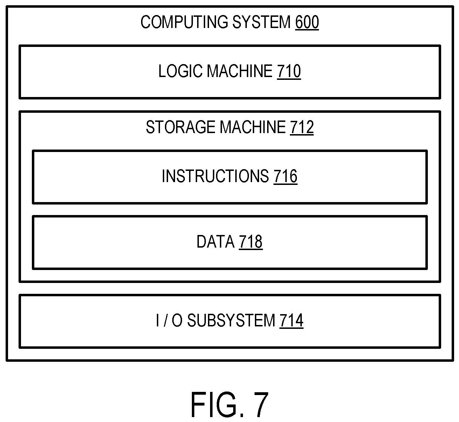

FIG. 2 is a flow diagram depicting an example method 200 that can be performed by a computing system of one or more computing devices to retrieve forecast data. As an example, computing system 600 of FIGS. 6 and 7 can perform method 200.

At 210, the method includes retrieving an initial set of forecast data for an aeronautical vehicle (AV) during preflight. As an example, the initial set of forecast data can be retrieved via a communications network during preflight, which may include a wireless or wired communications network. The initial set of forecast data retrieved at 210 can encompass an operating environment of the AV that includes the preflight location of the AV, a target destination location of the AV, and an anticipated flight path between the preflight location and the target destination. The operating environment, the preflight location, target destination, and anticipated flight path of the AV can be defined by flight plan data, as an example.

In at least some examples, the initial set of forecast data retrieved at 210 can include initial forecast data for each cell of a set of cells within a three-dimensional cell array that forms a spatial representation of the operating environment of the AV. For example, each cell of the three-dimensional cell array can have a respective longitude position and/or range within a longitude dimension, latitude dimension position and/or range within a latitude dimension, and altitude position and/or range within an altitude dimension.

The initial set of forecast data can include weather forecast data and/or aeronautical forecast data, as examples. Within the context of the three-dimensional cell array described above, the initial forecast data for each cell of the set of cells of the array can include weather forecast data and/or aeronautical forecast data for that cell. Weather forecast data for each cell can include one or more of a wind velocity forecast (e.g., wind speed and wind direction), an air temperature forecast, a precipitation forecast (e.g., type and/or magnitude), a visibility forecast (e.g., distance), a cloud cover forecast (e.g., type and/or magnitude), a turbulence forecast, and/or other suitable forms of weather forecast data. Aeronautical forecast data for each cell can include a forecast of other AVs that are forecast to be present at the cell.

At 212, the method includes identifying a current operating state 211 of the AV during flight. The current operating state can include a current location (e.g., longitude, latitude, and altitude), a trajectory, and a speed of the AV (e.g., measured as ground speed), as examples. The current operating state can be identified based on sensor data received from sensors located on-board the AV, as an example. Additionally or alternatively, the current operating state can be identified based on user input received via a user interface of the computing system.

At 214, the method includes determining an anticipated flight path 215 for the AV in three dimensions through an operating environment between a current location of the AV and a target destination of the AV. The anticipated flight path can be determined at 214 based on flight plan data 209. Additionally or alternatively, the anticipated flight path can be determined based on the current operating state 211 of the AV identified at 212.

In at least some examples, the anticipated flight path can be defined by a function that defines a three-dimensional path of travel between the current location and the target destination location. The three-dimensional path of travel function can be defined by one or more waypoints along the anticipated flight path between the current location and the target destination location. The current location, target destination location, and each waypoint can be represented by a respective location in three-dimensional space. As an example, each location in three-dimensional space can be represented by a respective longitude value, latitude value, and altitude value.

As indicated at 216, the anticipated flight path includes an altitude profile 217 of the AV over a geographic region through the operating environment and a time-based location profile 219 of the AV along the anticipated flight path. As an example, the time-based location profile identifies an estimated time of arrival of the AV at the target destination and/or at one or more waypoints along the anticipated flight path.

In at least some examples, the anticipated flight path can include a primary approach and landing procedure for the AV at the target destination. As described in further detail with reference to operation 230, one or more alternative flight paths can be determined for the AV in relation to the anticipated flight path. As an example, an alternative flight path can include an alternative approach and landing procedure for the AV at the target destination location and/or a rerouted flight path to the target destination location that differs from the anticipated flight path. As another example, an alternative flight path can include a rerouted flight path to an alternative target destination location that differs from the target destination location.

At 218, the method includes determining whether a forecast update time interval 221 has concluded. As an example, the forecast update time interval defines a duration of time from the last retrieval of forecast data, which may occur during preflight at 210 or during flight of the AV as described in further detail at 236. The forecast update time interval can be stored within the computing system as forecast update interval data, and can take the form of a setting that can be defined by a user. As illustrative examples, the forecast update time interval can define a duration of time in terms of hours (e.g., 2 hours, 4 hours, etc.) and/or minutes (e.g., 30 minutes). Additionally or alternatively, the forecast update time interval can take the form of a qualitative setting (e.g., high, medium, low) that corresponds to a predefined duration of time.

At 220, the method includes determining whether the anticipated flight path determined at 214 has changed. As an example, the current operating state determined at 212 can be compared to the anticipated flight path as defined, for example, by flight plan data to determine whether the AV has deviated from the anticipated flight path. Deviations of the AV from the anticipated flight path can include spatial deviations (e.g., latitude, longitude, and/or altitude) and/or temporal deviations (e.g., based on speed and/or current location of the AV relative to the time-based profile). As another example, the flight plan data can be updated by a user or other computer-implemented process to identify a different anticipated flight path, and a change to the anticipated flight path can be determined at 220 based on the update to the flight plan data. Operation 220 can return to operation 212 as part of a process loop.

At 222, the method includes performing a forecast update process for the AV during flight. As a first example, the forecast update process may be performed at 222 responsive to determining that the forecast update interval has concluded at 218. In this example, upon conclusion of the forecast update interval, the forecast update process can be performed at 222. As a second example, the forecast update process may be performed at 222 responsive to determining that the anticipated flight path of the AV has changed at 220. In this example, upon determining that the anticipated flight path of the AV has changed during flights, the forecast update process can be performed at 222.

As part of performing the forecast update process at 222, the method at 224 includes identifying, based on the anticipated flight path, a set of cells 225 within a three-dimensional cell array forming a spatial representation of the operating environment. As an example, each cell of the three-dimensional cell array can have a respective longitude position and/or range within a longitude dimension, latitude dimension position and/or range within a latitude dimension, and altitude position and/or range within an altitude dimension.

During flight of the AV, forecast data can be retrieved for the set of cells identified at operation 224 within the three-dimensional cell array without retrieving forecast data for all cells of the three-dimensional cell array. For example, the initial forecast data retrieved during preflight at operation 210 can encompass a broader range of cells of the three-dimensional cell array as compared to the set of cells identified at operation 224 for retrieval of forecast data during flight of the AV. This approach can limit the quantity of forecast data retrieved during flight of the AV based on the anticipated flight path, thereby reducing the quantity of forecast data transferred over a wireless network to the AV during flight.

The set of cells identified within the three-dimensional cell array at 224 can include cells located along the anticipated flight path. For example, at 226, the method can include identifying cells located along the anticipated flight path as part of identifying the set of cells at 224. In this example, the cells identified at 226 as part of the set of cells can include cells through which the AV is expected to pass while traveling along the anticipated flight path.

In at least some examples, the set of cells identified within the three-dimensional cell array at 224 can further include cells located within a threshold proximity to the anticipated flight path. For example, at 228, the method can include identifying cells located within a threshold proximity to the anticipated flight path as part of identifying the set of cells at 224. In this example, one or more cells residing within the threshold proximity to the anticipated flight path and extending outward from in each direction (e.g., longitude, latitude, and altitude directions) from the cells identified at 226 can be identified at 228 for inclusion in the set of cells. The additional cells identified at 228 can provide a broadened range of cells from the cells identified at 226 to thereby encompass a limited region surrounding the anticipated path of travel.

The threshold proximity applied at operation 228 can be stored within the computing system as data, and can take the form of a setting that can be defined by a user. In at least some examples, the threshold proximity can be defined on a per dimension basis such that a first threshold proximity is defined in the longitude and latitude dimensions, and a second threshold proximity is defined in the altitude dimension. As illustrative example, a first threshold proximity can be defined in the longitude and latitude dimensions as a first distance (e.g., 10 miles or kilometers) or a first quantity of cells (e.g., 1, 5, 10, 20, etc.) of a given cell dimension, and a second threshold proximity can be defined in the altitude dimension as a second distance (e.g., one thousand feet or meters, three thousand feet or meters, etc.) or a second quantity of cells.

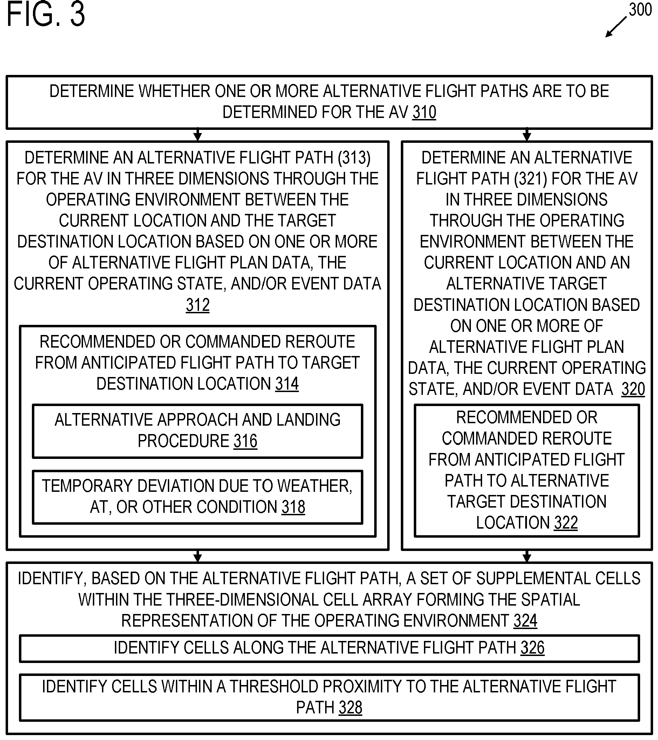

As part of operation 222, the method at 230 can further include performing a supplemental flight plan process to identify supplemental cells within the three-dimensional cell array, as described in further detail with reference to FIG. 3. Supplemental cells may be identified as part of operation 230 for alternative flight paths and/or alternative approach and landing procedures, as an example.

As part of operation 222, the method at 232 includes, for each cell of the set of cells identified at 224, determining a cell-specific forecast time 233 for the cell based on the time-based location profile of the AV as indicated at 234. In at least some examples, the cell-specific forecast time for the cell corresponds to the anticipated time of arrival of the AV at that cell. As another example, the cell-specific forecast time for the cell corresponds to the anticipated time of arrival of the AV to within a threshold proximity of that cell.

At 236, the method includes retrieving forecast data for the cell corresponding to the cell-specific forecast time. Examples of retrieving the forecast data are described in further detail with reference to FIG. 6. Briefly, for each cell identified at operation 224 and/or operation 230, the forecast data for that cell is retrieved by one or more computing devices on-board the AV from one or more remote computing devices over a wireless communications link. Retrieving the forecast data can include the one or more computing devices on-board the AV sending one or more requests over the wireless communications link to the one or more remote computing devices.

At 238, the method includes outputting the forecast data retrieved for the cell for each cell of the set of cells identified at operation 224 and/or each cell of the set of supplemental cells identified at operation 230. As an example, the forecast data for each cell can be output via a graphical user interface presented on a display device.

FIG. 3 is a flow diagram depicting another example method 300 that can be performed by a computing system of one or more computing devices to retrieve forecast data. Method 300 corresponds to the supplemental flight plan process previously described with reference to operation 230 of method 200 of FIG. 2. This supplemental flight plan process can be performed to determine one or more alternative flight paths and associated cells for forecast data retrieval that differs from the anticipated flight path identified at operation 214 of method 200.

At 310, the method includes determining whether one or more alternative flight paths are to be determined for the AV. As an example, one or more alternative flight paths can be determined to be needed for the AV responsive to a user input, a reroute recommendation, a reroute command, or an indication of an event received by the computing system. Upon determining that one or more alternative flight paths are to be determined for the AV at 310, the method can proceed to one or more of operations 312 and/or 320.

An alternative flight path can be determined for the same target destination location as the anticipated flight path. For example, at 312, the method includes determining an alternative flight path 313 for the AV in three dimension through the operating environment between the current location and the target destination location based on one or more of alternative flight plan data, the current operating state of the AV, and/or event data identifying an event. Examples of events can include a weather event or an air traffic event located along or within a threshold proximity of the anticipated flight path, an event occurring on-board the AV (e.g., AV malfunction event, medical event, etc.), a change of the approach and landing procedure of the target designation location, etc.

The alternative flight path can be determined at 312 as previously described at 214 for the anticipated flight path using the alternative flight plan data, current operating state of the AV, and the event data. In at least some examples, the alternative flight plan data can identify or otherwise define the alternative flight path, and can include information similar to the flight plan data previously described with reference to method 200 of FIG. 2.

As indicated at 314, the alternative flight path can be for a recommended or commanded reroute of the AV from anticipated flight path to the same target destination location as the anticipated flight path. As an example, the alternative flight path can be determined for an alternative approach and landing procedure of the target destination location as indicated at 316. As another example, as indicated at 318, the alternative flight path can be determined for a temporary deviation from the anticipated flight path due to weather, air traffic, or other condition identified by the event data.

Additionally or alternatively, an alternative flight path can be determined for an alternative target destination location that differs from the target destination location of the anticipated flight path. For example, at 320, the method includes determining an alternative flight path 321 for the AV in three dimension through the operating environment between the current location and an alternative target destination location based on one or more of alternative flight plan data, the current operating state of the AV, and/or event data identifying an event.

The alternative flight path can be determined at 320 as previously described at 214 for the anticipated flight path using the alternative flight plan data, current operating state of the AV, and the event data. As an example, the alternative flight path can be determined for an approach and landing procedure of the alternative target destination location as indicated at 322. As previously described with reference to operation 312, the alternative flight path can be determined for a deviation from the anticipated flight path due to weather, air traffic, or other condition identified by the event data.

At 324, the method includes identifying, based on the alternative flight path, a set of supplemental cells within the three-dimensional cell array forming the spatial representation of the operating environment. Operation 324 can be performed to identify a set of supplemental cells for the alternative flight path as previously described with reference to operation 224 of method 200 of FIG. 2 for the anticipated flight path. The set of supplemental cells for the alternative flight path can be used at operation 232 to retrieve forecast data for each supplemental cell identified at 324 corresponding to a cell-specific forecast time determined for that cell.

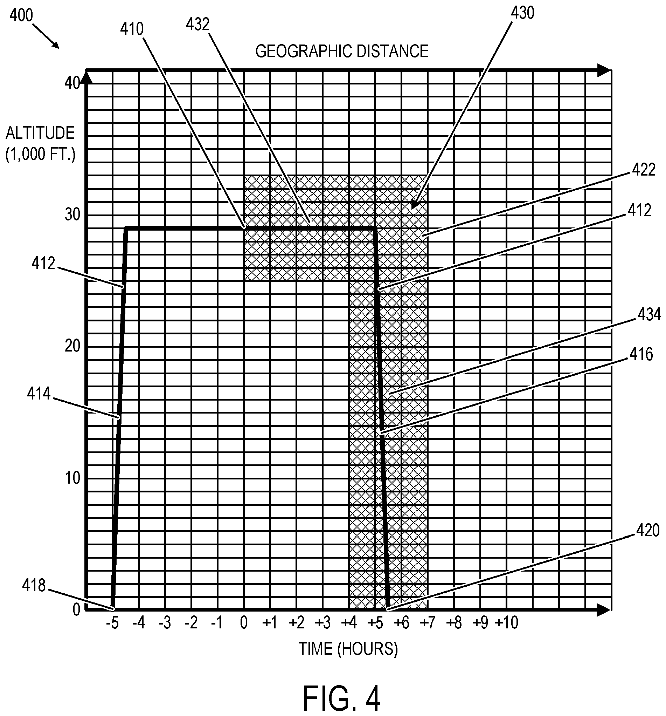

FIG. 4 is a graph 400 depicting a relationship between altitude, geographic distance, and cell-specific forecast time for an example anticipated flight path for an AV.

Graph 400 depicts altitude of the AV along the vertical axis. Graph 400 further depicts geographic distance and time along the horizontal axis. Geographic distance within graph 400 can include a longitude dimension component and a latitude dimension component. In this example, cells of a three-dimensional cell array forming a spatial representation of an operating environment have a size of 1,000 feet in the altitude dimension of the vertical axis and 500 miles in the geographic distance dimension of the horizontal axis. The cell dimensions of graph 400 are provided for illustrative purposes, and it will be understood that cells can have other suitable dimensions to provide a desired level of spatial resolution.

A current location 410 of the AV is depicted in graph 400 along a line 412 that includes an actual flight path component 414 representing an actual flight path of the AV, and an anticipated flight path component 416 representing an anticipated flight path of the AV. In this example, actual flight path component 414 of line 412 extends from an initial location 418 (e.g., a first airport) at an earlier time (e.g., -5 hours) to current location 410 at a present time (e.g., 0 hours). Furthermore, in this example, anticipated flight path component 416 of line 412 extends from current location 410 at the present time (e.g., 0 hours) to a target destination location 420 (e.g., a second airport) at a future time (e.g., +5.5 hours).

Line 412 represents an altitude profile of the AV over a geographic region in relation to the geographic distance traveled by the AV through the operating environment. In this example, initial location 418 of the AV has an initial altitude (e.g., 0 feet), current location 410 of the AV has a current altitude (e.g., 29,000 feet), and target destination location 420 has a destination altitude (e.g., 0 feet). Furthermore, in this example, the altitude profile of actual flight path component 414 represents the AV climbing in altitude from initial location 418 to a cruising altitude (e.g., 29,000), and anticipated flight path component 416 represents the AV descending in altitude from the cruising altitude to the destination altitude.

Additionally, line 412 represents a time-based location profile of the AV along the actual flight path and the anticipated flight path. For example, each location of the AV in three-dimensional space along line 412 as defined in the altitude dimension and geographic distance dimension has a defined time at which the AV was at that location for the actual flight path or is anticipated to arrive at that location for the anticipated flight path.

Within graph 400, the anticipated flight path of the AV from current location 410 to target destination location 420, as represented by anticipated flight path component 416 of line 410, passes through a shaded region 422. This shaded region 422 identifies a set of cells 430 for which forecast data can be retrieved at an update interval during flight of the AV. As previously described with reference to method 200 of FIG. 2, forecast data retrieved at an update interval for a set of cells includes cell-specific forecast data corresponding to the cell-specific forecast time of each cell. As an example, each cell identified by shaded region 422 has a respective cell-specific forecast time that can correspond to an expected time of arrival of the AV at that cell or at a location within a threshold proximity to that cell.

In the example of graph 400, cell 432 corresponding to an altitude range of 29,000 feet to 30,000 feet at some geographic distance ahead of the AV can have a cell-specific forecast time of +2 hours in the future. As another example, cell 434 corresponding to an altitude range of 16,000 feet to 17,000 feet at some further geographic distance ahead of the AV can have a cell specific-forecast time of +5 hours in the future. Thus, in these examples, the cell-specific forecast data retrieved for cell 432 is for a first time (e.g., +2 hours) whereas the cell-specific forecast data retrieved for cell 434 is for a second time (e.g., +5 hours) that differs from the first time.

As previously described with reference to method 200 of FIG. 2, a set of cells identified for forecast data retrieval can include cells located within a threshold proximity to the anticipated flight path. In the example of graph 400, the set of cells 430 identified by shaded region 422 includes cells located within a threshold proximity (e.g., 4,000 feet) to the anticipated flight path in the altitude dimension. For example, cells located 4,000 feet above and below the anticipated flight path are included within the set of cells 430 identified by shaded region 422. The set of cells 430 identified by shaded region 422 also includes cells located within a threshold proximity to the anticipated flight path in the geographic dimension. As previously described, the geographic dimension can have a longitude component and a latitude component. It will be understood that other suitable threshold proximities can be used in the altitude dimension, longitude dimension, and latitude dimension from those depicted by graph 400.

By including cells located within a threshold proximity to an anticipated flight path for retrieval of forecast data, forecast data can be retrieved and made available during flight for actual or potential deviations from the anticipated flight path by an AV. For example, operators of an AV can determine based on retrieved forecast data whether a change of altitude should be performed based on forecast data retrieved for the anticipated altitude and for altitudes located above and below the anticipated altitude. The threshold proximity can be defined in the altitude, longitude, and latitude dimensions to provide a suitable spatial buffer around the anticipated flight path while also excluding cells from forecast data retrieval that are located beyond the threshold proximity. For example, forecast data is not retrieved for cells located outside of shaded region 422 within graph 400 at the forecast update interval at which forecast data is retrieved for the set of cells 430 identified by shaded region 422.

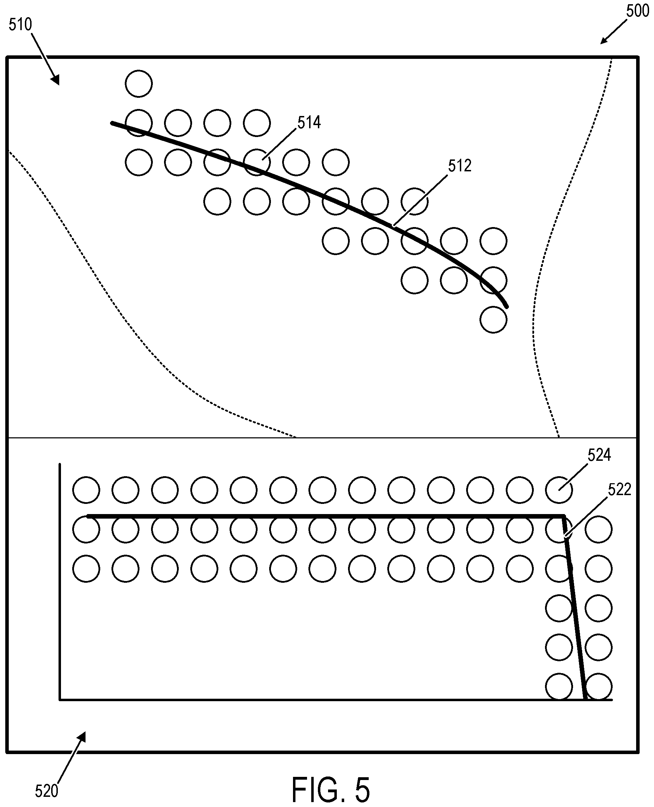

FIG. 5 schematically depicts an example graphical user interface (GUI) 500 by which forecast data can be output. As an example, GUI 500 can be output via a computing device on-board an AV.

In this example, GUI 500 includes a geographic representation 510 of a geographic region. Geographic representation 510 provides a view of some or all of an operating environment of an AV in a longitude dimension and a latitude dimension. Geographic representation 510 includes a line 512 representing an anticipated flight path of the AV. Geographic representation 510 further includes a plurality of forecast data items along the anticipated flight path, an example of which includes forecast data item 514. Each forecast data item can include a graphical representation of cell-specific forecast data for a respective cell corresponding to a cell-specific forecast time for that cell.

Furthermore, in this example, GUI 500 includes an altitude representation 520. Altitude representation 520 provides a view of some or all of an operating environment of the AV in an altitude dimension and a geographic distance dimension. As previously described with reference to FIG. 4, the geographic distance dimension can include a longitude dimension component and a latitude dimension component. Altitude representation 520 includes a line 522 representing the anticipated flight path of the AV. Altitude representation 520 further includes a plurality of forecast data items along the flight path, an example of which includes forecast data item 524. As previously described, each forecast data item can include a graphical representation of cell-specific forecast data for a respective cell corresponding to a cell-specific forecast time for that cell.

It will be understood that GUI 500 is provided as an illustrative example of forecast data being output, and that other suitable graphical representations and/or other non-visual forms of output can be used to present forecast data.

FIG. 6 is a schematic diagram depicting an example computing system 600 that can perform method 200 of FIG. 2 and method 300 of FIG. 3.

Computing system 600 includes a computing device 610 located on-board example AV 110 of FIG. 1. As an example, computing device 610 can take the form of a personal computing device (e.g., a tablet computer, handheld computer, laptop computer, or other mobile computer) operated by flight personnel on-board AV 110. Alternatively, computing device 610 can be integrated with AV 110.

AV 110 can further include integrated sensors 612, a first communications interface 614 that enables wireless communications over a first wireless link, a second communications interface 616 that enables wireless communications over a second wireless link that differs from the first wireless link, and one or more other computing devices 618.

Sensors 612 can include sensors integrated with or located on-board AV 110 that output sensor data from which the current operating state of the AV can be identified as previously described with reference to operation 212 of method 200 of FIG. 2. Other computing devices 618 can include computing devices integrated with AV 110 and/or located on-board the AV.

First communications interface 614 enables communications between computing device 610 and one or more remote computing devices 620 of computing system 600 using a first wireless communications protocol and network infrastructure. As an example, first communications interface 614 can be used by computing device 610 to communicate with remote computing devices 620 while AV 110 is located on the ground. For example, first communications interface 614 can enable computing device 610 to retrieve an initial set of forecast data for AV 110 from remote computing device 620 during preflight. Alternatively, first communications interface 614 can be integrated with and form part of computing device 610.

Second communications interface 616 enables communications between computing device 610 and remote computing devices 620 using a second wireless communications protocol and network infrastructure that differs from first communications interface 614. As an example, second communications interface 616 can be used by computing device 610 to communicate with remote computing devices 620 during flight of AV 110. For example, second communications interface 616 can enable computing device 610 to retrieve forecast data for AV 110 from remote computing device 620 during flight as previously described with reference to operation 222 of FIG. 2. Alternatively, second communications interface 616 can be integrated with and form part of computing device 610.

In at least some examples, second communications interface 616 takes the form of a satellite communications interface for communicating with orbiting satellites, and first communications interface 614 takes the form of a terrestrial communications interface for communicating with terrestrial-based access points. In this example or other examples, communications over second communications interface 616 may be more costly, more resource intensive, and/or have lower bandwidth capacity as compared to first communications interface 614. Communication networks 630 are schematically depicted in FIG. 6 over which wireless communications between computing device 610 (or other computing devices 618) on-board AV 110 and remote computing devices 120 flow.

Computing device 610 includes an application program 640 and application data 642 stored thereon. Application program 640 is executable by computing device 610 to perform the various operations and methods described herein with respect to the computing device. Application program 640 includes a user interface 644 by which a user (e.g., AV personnel) can interact with the application program. As an example, user interface 644 can take the form of a GUI (e.g., GUI 500 of FIG. 5) and/or other suitable user interface (e.g., an audio interface). Application program 640 can retrieve, update, and store various data within application data 642.

As an example, application data 642 can include one or more of a client identifier 646, flight plan data 648, retrieved forecast data 650, settings data 652, a spatial representation 654 of the operating environment, and/or other data 656. Client identifier 646 can identify one or more of a user account for a user of application program 640, AV 110, and/or application program 640 enabling multiple clients to be distinguished from each other by remote computing devices 120. Flight plan data 648 can include the flight plan data previously described with reference to method 200 of FIG. 2 and supplemental flight plan data previously described with reference to method 300 of FIG. 3. Retrieved forecast data 650 can include the forecast data retrieved at operation 236 of method 200 of FIG. 2. Settings data 652 can define one or more of (1) a resolution of spatial representation 654, including a size of each cell in a longitude dimension, latitude dimension, and altitude dimension, (2) the various threshold proximities described herein for identifying cells for a given flight path or supplemental flight path, and for determining a cell-specific forecast time, and (3) the forecast update interval, as examples. Spatial representation 654 can define a three-dimensional cell array, such as previously described with reference to array 150 of FIG. 1 and operation 224 of method 200 of FIG. 2.

Remote computing devices 620 can include terrestrial-based server computing devices forming a server system, as an example. Remote computing devices 620 include a service program 660 and service data 662 stored thereon. Service program 660 is executable by remote computing devices 620 to perform the various operations and methods described herein with respect to the remote computing devices. Service program 660 can retrieve, update, and store various data within service data 662.

Service data 662 can include flight plan data 663 for AV 110. Service data 662 at remote computing devices 620 can refer to an instance of flight plan data 648 at computing device 610.

Service data 662 can include forecast data 664, including retrieved forecast data 666 for computing device 610 and non-retrieved forecast data 668 that has not been retrieved for computing device 610. Retrieved forecast data 666 at remote computing devices 620 can refer to an instance of retrieved forecast data 650 at computing device 610.

Service data 662 can include settings data 670 that can be associated with client identifier 646 within service data 662 to enable remote computing devices 620 to implement settings on-behalf of a client identified by client identifier 646. Settings data 670 at remote computing devices 620 can refer to an instance of settings data 652 at computing device 610.

Service data 662 can include a spatial representation 672 of an operating environment. Spatial representation 672 at remote computing devices 620 can refer to an instance of spatial representation 654 at computing device 610. Service data 662 can include other data 674.

As described by the following examples, method 200 of FIG. 2 and method 300 of FIG. 3 can be performed by computing system 600 in a variety of ways, depending on implementation.

As a first implementation, methods 200 and 300 can be performed primarily by computing device 110 through execution of application program 640. As an example, application program 640 can identify a current operating state of the AV at operation 212, determine an anticipated flight path at operation 214, determine an alternative flight path at operations 312 and 320, identify a set of cells at operation 224, identify a set of supplemental cells at 324, determine a cell-specific forecast time at operation 234, retrieve the forecast data at operation 236, and output the forecast data at operation 238.

In this example, forecast data can be retrieved at operation 236 by computing device 110 sending one or more requests for the forecast data to remote computing devices 620. The one or more requests can identify the set of cells and/or the set of supplemental cells for which forecast data is to be provided to computing device 610 by remote computing devices 620. For each cell, the one or more requests can further identify the cell-specific forecast time for that cell. The one or more requests can further identify client identifier 646. Responsive to the one or more requests, service program 660 of remote computing device 620 can send one or more responses to application program 640 that include the cell-specific forecast data corresponding to the cell-specific forecast time.

As a second implementation, methods 200 and 300 can be performed by a combination of computing device 110 and remote computing devices 620 in a manner that transfers one or more operations of methods 200 and 300 from computing device 110 to remote computing devices 620.

As a first example of the second implementation, application program 640 can subscribe to forecast updates from service program 660 (e.g., at the forecast update interval) by sending a subscription request that includes client identifier 646. The subscription request can further include one or more of flight plan data 648 and settings data 652. In some examples, flight plan data and settings data can be predefined and stored at remote computing devices 620 in association with client identifier 646 without the flight plan data and settings data accompanying the subscription request. Responsive to the subscription request, service program 660 can retrieve and send the retrieved forecast data to application program 640 periodically (e.g., at the forecast update interval). Additionally, service program 660 can identify a current operating state of the AV at operation 212 (e.g., from radar and/or other third-party data sources), determine an anticipated flight path at operation 214, determine an alternative flight path at operations 312 and 320, identify a set of cells at operation 224, identify a set of supplemental cells at 324, determine a cell-specific forecast time at operation 234, retrieve the forecast data at operation 236, and output the forecast data at operation 238 by sending the forecast data as one or more responses to application program 640.

As a second example of the second implementation, application program 640 can send one or more requests for forecast data (e.g., at the forecast update interval) to service program 662. The one or more requests can include client identifier 646. In response to the one or more requests, service program 660 can process and send one or more responses to application program 640 that include the forecast data as previously described above for the first example of the second implementation.

As a third example of the second implementation, application program 640 can send one or more requests for forecast data (e.g., at the forecast update interval) to service program 662 in which the one or more requests include preprocessed data, including one or more of client identifier 646, a current state of the AV, an anticipated flight path, an alternative flight path, and/or settings data 652. In response to the one or more requests, service program 660 can utilize the preprocessed data and/or process data accompanying the requests to identify cells for which forecast data is to be retrieved by service program 660. The service program 660 can send one or more responses to application program 640 that include the forecast data retrieved by the service program.

As previously described, the methods and operations described herein can be tied to a computing system of one or more computing devices. In particular, such methods and operations may be implemented as a computer-application program or service, an application-programming interface (API), a library, and/or other computer-program product.

FIG. 7 schematically shows an example of computing system 600 of FIG. 6 that can perform one or more of the methods and operations described herein. Computing system 600 is shown in FIG. 7 in simplified form. Computing system 600 can take the form of one or more personal computers, server computers, tablet computers, network computing devices, mobile computing devices, mobile communication devices (e.g., smart phone), and/or other computing devices.

Computing system 600 includes a logic machine 710, a computer-readable storage machine 712, and an input / output subsystem 714. Logic machine 710 includes one or more physical devices configured to execute instructions 716 stored in storage machine 712. For example, the logic machine may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic machine can include one or more processor devices configured to execute software instructions. Instructions 716 can include application program 640 and service program 660, as examples. Additionally or alternatively, the logic machine may include one or more hardware or firmware logic machines configured to execute hardware or firmware instructions. Processors of the logic machine may be single-core or multi-core, and the instructions executed thereon may be configured for sequential, parallel, and/or distributed processing. Individual components of the logic machine optionally may be distributed among two or more separate devices, which may be remotely located and/or configured for coordinated processing. Aspects of the logic machine may be virtualized and executed by remotely accessible, networked computing devices configured in a cloud-computing configuration.

Storage machine 712 includes one or more physical devices configured to hold instructions 716 and other data 718 executable by the logic machine to implement the methods and operations described herein. When such methods and operations are implemented, the state of storage machine 712 may be transformed-e.g., to hold different data. Data 718 can include application data 642 and service data 662 of FIG. 6.

The storage machine can include removable and/or built-in devices. The storage machine can include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. The storage machine can include volatile, nonvolatile, dynamic, static, read/write, read-only, random-access, sequential-access, location-addressable, file-addressable, and/or content-addressable devices.

It will be appreciated that the storage machine includes one or more physical devices. However, aspects of the instructions described herein alternatively may be propagated by a communication medium (e.g., an electromagnetic signal, an optical signal, etc.) that is not held by a physical device for a finite duration.

Aspects of logic machine 710 and storage machine 712 can be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 600 implemented to perform a particular function. In some cases, a module, program, or engine may be instantiated via logic machine 710 executing instructions held by storage machine 712. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

It will be appreciated that a "service", as used herein, is a program executable across multiple client sessions. A service can be available to one or more system components, programs, and/or other services. In some implementations, a service can run on one or more server-computing devices.

Input / output subsystem 714 includes one or more input devices and one or more output devices. As an example, input / output subsystem 714 can include or be connected to a display device used to present a visual representation of data held by storage machine 712. This visual representation may take the form of a graphical user interface. As the herein described methods and operations change the data held by the storage machine, and thus transform the state of the storage machine, the state of display device may likewise be transformed to visually represent changes in the underlying data. Input / output subsystem 714 can include or interface with one or more other input devices such as a keyboard, mouse, touch screen, or game controller. In some embodiments,

Input / output subsystem 714 can include a communication subsystem that communicatively couples computing system 600 with one or more other computing devices. The communication subsystem can include wired and/or wireless communication devices compatible with one or more different communication protocols. As examples, the communication subsystem can be configured for communication via a wired or wireless local- or wide-area network. In some examples, the communication subsystem can allow computing system 600 to send and/or receive messages to and/or from other devices via a network such as the Internet.

Further, the disclosure comprises configurations according to the following clauses.

Clause 1. A method performed by a computing system of one or more computing devices, the method comprising: performing a forecast update process for an aeronautical vehicle (AV) during flight that includes: determining an anticipated flight path for the AV in three dimensions through an operating environment between a current location and a target destination location based on flight plan data; wherein the anticipated flight path includes an altitude profile of the AV over a geographic region through the operating environment and a time-based location profile of the AV along the anticipated flight path; identifying, based on the anticipated flight path, a set of cells within a three-dimensional cell array forming a spatial representation of the operating environment; and for each cell of the set of cells: determining a cell-specific forecast time for the cell based on the time-based location profile of the AV, retrieving forecast data for the cell corresponding to the cell-specific forecast time, and outputting the forecast data retrieved for the cell.

Clause 2. The method of clause 1, wherein the forecast update process for the AV is performed while the AV travels along an actual flight path toward the target destination location.

Clause 3. The method of any of clauses 1 - 2, wherein the forecast update process for the AV is performed at a forecast update time interval while the AV travels along an actual flight path toward the target destination location.

Clause 4. The method of clause 3, wherein the forecast update time interval is user-defined as a setting stored at the computing system.

Clause 5. The method of any of clauses 1-4, wherein a computing device of the computing system resides on-board the AV.

Clause 6. The method of clause 5, wherein for each cell of the set of cells, retrieving the forecast data for the cell corresponding to the cell-specific forecast time includes: sending one or more requests from the computing device on-board the AV to a remote computing device over a wireless communications link, and receiving one or more responses that include the forecast data for the cell from the remote computing device at the computing device on-board the AV over the wireless communications link.

Clause 7. The method of any of clauses 1-6, wherein the cell-specific forecast time is determined for each cell based on an anticipated time of arrival of the AV at the cell.

Clause 8. The method of any of clauses 1-7, wherein the cell-specific forecast time is determined for each cell based on an anticipated time of arrival of the AV at a location within a threshold proximity to the cell.

Clause 9. The method of any of clauses 1 - 8, wherein the set of cells identified include cells located along the anticipated flight path.

Clause 10. The method of clause 9, wherein the set of cells identified further include cells located within a threshold proximity to the anticipated flight path; and wherein the set of cells does not include cells located beyond the threshold proximity to the anticipated flight path.

Clause 11. The method of any of clauses 1 - 10, further comprising: determining an alternative flight path for the AV in three dimensions through the operating environment between the current location and the target destination location or an alternative target destination location; identifying, based on the alternative flight path, a set of supplemental cells within a three-dimensional cell array forming a spatial representation of the operating environment; and for each cell of the set of supplemental cells: determining a cell-specific forecast time for the cell, retrieving forecast data for the cell corresponding to the cell-specific forecast time, and outputting the forecast data retrieved for the cell.

Clause 12. The method of any of clauses 1 - 11, wherein the forecast data includes weather forecast data and/or aeronautical forecast data.

Clause 13. A computing system of one or more computing devices, comprising: a logic machine; and a storage machine having instructions stored thereon executable by the logic machine to: perform a forecast update process for an aeronautical vehicle (AV) during flight that includes: determining an anticipated flight path for the AV in three dimensions through an operating environment between a current location and a target destination location based on flight plan data; wherein the anticipated flight path includes an altitude profile of the AV over a geographic region through the operating environment and a time-based location profile of the AV along the anticipated flight path; identifying, based on the anticipated flight path, a set of cells within a three-dimensional cell array forming a spatial representation of the operating environment; and for each cell of the set of cells: determining a cell-specific forecast time for the cell based on the time-based location profile of the AV, retrieving forecast data for the cell corresponding to the cell-specific forecast time, and outputting the forecast data retrieved for the cell.

Clause 14. The computing system of clause 13, wherein the forecast update process for the AV is performed at a forecast update time interval.

Clause 15. The computing system of any of clauses 13 - 14, wherein the cell-specific forecast time is determined for each cell based on an anticipated time of arrival of the AV at the cell.

Clause 16. The computing system of any of clauses 13 - 15, wherein the cell-specific forecast time is determined for each cell based on an anticipated time of arrival of the AV at a location within a threshold proximity to the cell.

Clause 17. The computing system of any of clauses 13 - 16, wherein the set of cells identified include cells located along the anticipated flight path and cells located within a threshold proximity to the anticipated flight path; and wherein the set of cells does not include cells located beyond the threshold proximity to the anticipated flight path.

Clause 18. The computing system of any of clauses 13 - 17, wherein the instructions are further executable by the logic machine to: determine an alternative flight path for the AV in three dimensions through the operating environment between the current location and the target destination location or an alternative target destination location; identify, based on the alternative flight path, a set of supplemental cells within a three-dimensional cell array forming a spatial representation of the operating environment; and for each cell of the set of supplemental cells: determine a cell-specific forecast time for the cell, retrieve forecast data for the cell corresponding to the cell-specific forecast time, and output the forecast data retrieved for the cell.

Clause 19. The computing system of any of clauses 13 - 18, wherein the forecast data includes weather forecast data and/or aeronautical forecast data.

Clause 20. An article of manufacture, comprising: a computer-readable storage machine having instructions stored thereon executable by a computing system to: perform a forecast update process for an aeronautical vehicle (AV) during flight that includes: determining an anticipated flight path for the AV in three dimensions through an operating environment between a current location and a target destination location based on flight plan data; wherein the anticipated flight path includes an altitude profile of the AV over a geographic region through the operating environment and a time-based location profile of the AV along the anticipated flight path; identifying, based on the anticipated flight path, a set of cells within a three-dimensional cell array forming a spatial representation of the operating environment; and for each cell of the set of cells: determining a cell-specific forecast time for the cell based on the time-based location profile of the AV, retrieving forecast data for the cell corresponding to the cell-specific forecast time, and outputting the forecast data retrieved for the cell.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method (200, 300) performed by a computing system (600) of one or more computing devices (610, 620), the method (200, 300) comprising:
performing a forecast update process (222) for an aeronautical vehicle (AV) (110) during flight that includes:
determining an anticipated flight path (134) for the AV (110) in three dimensions through an operating environment (100) between a current location (126) and a target destination location (124) based on flight plan data (648, 663);
wherein the anticipated flight path (134) includes an altitude profile (217) of the AV (110) over a geographic region (130) through the operating environment (100) and a time-based location profile (219) of the AV (110) along the anticipated flight path (134);
identifying, based on the anticipated flight path (134), a set of cells (430) within a three-dimensional cell array (150) forming a spatial representation (152) of the operating environment (100); and
for each cell (160) of the set of cells (430):
determining a cell-specific forecast time (233) for the cell (160) based on the time-based location profile (219) of the AV (110),
retrieving forecast data (650, 666) for the cell (160) corresponding to the cell-specific forecast time (233), and
outputting the forecast data (650, 666) retrieved for the cell (160).

2. The method (200, 300) of claim 1, wherein the forecast update process (222) for the AV (110) is performed, optionally at a forecast update time interval (221), while the AV (110) travels along an actual flight path (414) toward the target destination location (124), wherein optionally the forecast update time interval (221) is user-defined as a setting (652) stored at the computing system (600).

3. The method (200, 300) of claim 1 or 2, wherein a computing device (610) of the computing system (600) resides on-board the AV (110),
wherein optionally for each cell (160) of the set of cells (430), retrieving the forecast data (650, 666) for the cell (160) corresponding to the cell-specific forecast time (233) includes:
sending one or more requests from the computing device (610) on-board the AV (110) to a remote computing device (620) over a wireless communications link (630), and
receiving one or more responses that include the forecast data (650, 666) for the cell (160) from the remote computing device (620) at the computing device (610) on-board the AV (110) over the wireless communications link (630).

4. The method (200, 300) of any of claims 1-3, wherein the cell-specific forecast time (233) is determined for each cell (160) based on an anticipated time of arrival of the AV (110) at the cell (160).

5. The method (200, 300) of any of claims 1-4, wherein the cell-specific forecast time (233) is determined for each cell (160) based on an anticipated time of arrival of the AV (110) at a location within a threshold proximity to the cell (160).

6. The method (200, 300) of any of claims 1-5, wherein the set of cells (430) identified include cells located along the anticipated flight path (134), and optionally further include cells located within a threshold proximity to the anticipated flight path (134), wherein the set of cells (430) does not include cells located beyond the threshold proximity to the anticipated flight path (134).

7. The method (200, 300) of any of claims 1-6, further comprising:
determining an alternative flight path (313) for the AV (110) in three dimensions through the operating environment (100) between the current location (126) and the target destination location (124) or an alternative target destination location (124);
identifying, based on the alternative flight path (313), a set of supplemental cells within a three-dimensional cell array (150) forming a spatial representation (152) of the operating environment (100); and
for each cell (160) of the set of supplemental cells:
determining a cell-specific forecast time (233) for the cell (160),
retrieving forecast data (650, 666) for the cell (160) corresponding to the cell-specific forecast time (233), and
outputting the forecast data (650, 666) retrieved for the cell (160).

8. The method (200, 300) of any of claims 1-7, wherein the forecast data (650, 666) includes weather forecast data (240) and/or aeronautical forecast data (242).

9. A computing system (600) of one or more computing devices (610, 620), comprising:
a logic machine (710); and
a storage machine (712) having instructions (716) stored thereon executable by the logic machine (710) to:
perform a forecast update process (222) for an aeronautical vehicle (AV) (110) during flight that includes:
determining an anticipated flight path (134) for the AV (110) in three dimensions through an operating environment (100) between a current location (126) and a target destination location (124) based on flight plan data (648, 663);
wherein the anticipated flight path (134) includes an altitude profile (217) of the AV (110) over a geographic region (130) through the operating environment (100) and a time-based location profile (219) of the AV (110) along the anticipated flight path (134);
identifying, based on the anticipated flight path (134), a set of cells (430) within a three-dimensional cell array (150) forming a spatial representation (152) of the operating environment (100); and
for each cell (160) of the set of cells (430):
determining a cell-specific forecast time (233) for the cell (160) based on the time-based location profile (219) of the AV (110),
retrieving forecast data (650, 666) for the cell (160) corresponding to the cell-specific forecast time (233), and
outputting the forecast data (650, 666) retrieved for the cell (160).

10. The computing system (600) of claim 9, wherein the forecast update process (222) for the AV (110) is performed at a forecast update time interval (221).

11. The computing system (600) of claim 9 or 10, wherein the cell-specific forecast time (233) is determined for each cell (160) based on an anticipated time of arrival of the AV (110) at the cell (160) and/or based on an anticipated time of arrival of the AV (110) at a location within a threshold proximity to the cell (160).

12. The computing system (600) of any of claims 9-11, wherein the set of cells (430) identified include cells located along the anticipated flight path (134) and cells located within a threshold proximity to the anticipated flight path (134); and
wherein the set of cells (430) does not include cells located beyond the threshold proximity to the anticipated flight path (134).

13. The computing system (600) of any of claims 9-12, wherein the instructions (716) are further executable by the logic machine (710) to:
determine an alternative flight path (313) for the AV (110) in three dimensions through the operating environment (100) between the current location (126) and the target destination location (124) or an alternative target destination location (124);
identify, based on the alternative flight path (313), a set of supplemental cells within a three-dimensional cell array (150) forming a spatial representation (152) of the operating environment (100); and
for each cell (160) of the set of supplemental cells:
determine a cell-specific forecast time (233) for the cell (160),
retrieve forecast data (650, 666) for the cell (160) corresponding to the cell-specific forecast time (233), and
output the forecast data (650, 666) retrieved for the cell (160).

14. The computing system (600) of any of claims 9-13, wherein the forecast data (650, 666) includes weather forecast data (240) and/or aeronautical forecast data (242).

15. An article of manufacture, comprising:
a computer-readable storage machine (712) having instructions (716) stored thereon executable by a computing system (600) to:
perform a forecast update process (222) for an aeronautical vehicle (AV) (110) during flight that includes:
determine an anticipated flight path (134) for the AV (110) in three dimensions through an operating environment (100) between a current location (126) and a target destination location (124) based on flight plan data (648, 663);
wherein the anticipated flight path (134) includes an altitude profile (217) of the AV (110) over a geographic region (130) through the operating environment (100) and a time-based location profile (219) of the AV (110) along the anticipated flight path (134);
identifying, based on the anticipated flight path (134), a set of cells (430) within a three-dimensional cell array (150) forming a spatial representation (152) of the operating environment (100); and
for each cell (160) of the set of cells (430):
determining a cell-specific forecast time (233) for the cell (160) based on the time-based location profile (219) of the AV (110),
retrieving forecast data (650, 666) for the cell (160) corresponding to the cell-specific forecast time (233), and
outputting the forecast data (650, 666) retrieved for the cell (160).
